# EUROPEAN PATENT APPLICATION

(11) **EP 4 566 491 A1**
(43) Date of publication of application: **11.06.2025**
(21) Application number: 24214735.3
(22) Date of filing: 22.11.2024
(51) Int. Cl.: A47J 31/36

(54) **COFFEE BREWING DEVICE**

(30) Priority: 05.12.2023 CN 202323302911 U
(71) Applicant: Shenzhen Qingquan Industrial Design Co., Ltd., Shenzhen Guangdong (CN); Foshan Chuao Electrical Technology Co., Ltd., Foshan Guangdong (CN)
(72) Inventor: He, Laisheng, Shenzhen, Guangdong (CN); You, Ruichao, Foshan, Guangdong (CN)
(74) Representative: Cabinet Chaillot

(57) **Abstract**

The invention relates to the technical field of coffee machines, and in particular to a coffee brewing device, comprising a brewing head and a brewer, the device also comprises a fixing bracket, a brewer bracket, and a drive motor, the fixing bracket is provided with a screw rod and a driving bracket, the screw rod is in transmission engagement with the drive motor via a first gear set, the screw rod is connected to the driving bracket through a threaded engagement, the driving bracket is connected to the brewing head; the brewer is connected to the brewer bracket, the brewer bracket is rotatably engaged with the fixing bracket; the device also comprises a guide plate, the guide plate is rotatably engaged with the fixing bracket, one side of the guide plate is provided with a special-shaped slot, and the other side is provided with an elongated slot, the brewing head or the screw rod is provided with a main convex column that extends into the special-shaped slot, the brewer bracket is provided with a follower convex column that extends into the elongated slot. The movement of the main convex column within the special-shaped slot drives the rotation of the guide plate; by abandoning the need for a movable frame, the brewer is directly guided by the elongated slot; this significantly reduces the incidence of jamming in the brewer, lowers the requirements for precision and wear resistance, and further decreases manufacturing and maintenance costs.

## Description

### Technical Field

The invention relates to the technical field of coffee machines, and in particular to a coffee brewing device.

### Background

A brewing head of a traditional coffee machine achieves movement relative to the brewer through the transmission cooperation of threads on an outer side of the brewing head with an external gear set and a motor, as exemplified in a brewing unit of a coffee machine disclosed in a patent with patent number 200910174566.5. However, the brewing head threads of the brewing unit in the coffee machine are prone to accumulating dirt, making cleaning inconvenient; additionally, the structure of the brewing unit is complex, leading to high production and maintenance costs.

To address the above issues, a patent with patent number 201710169745.4 discloses a coffee brewing device, two motion tracks for guiding the movement of a powder box are arranged on a fixed frame assembly, a nut is arranged on a screw rod to drive a movable frame up and down; by moving the nut up and down to drive the powder box to move, the variable directional movement of the powder box assembly, the swing of the powder box assembly, coffee powder addition, coffee powder compression and brewing, residue pushing, and scraping movements are realized. This design allows the brew head to be cleaned conveniently without needing to be unscrewed.

However, the fixed frame assembly of the above coffee brewing device requires two tracks to guide the powder box, along with the movable frame providing lateral movement space for the powder box. The precise movement of the powder box depends on the three guiding components acting on it, which need to be accurate and wear-resistant. This leads to high manufacturing and maintenance costs, and significantly increases the likelihood of jamming failures.

Therefore, it is necessary to propose a new type of brewing device to solve the problems of high precision and wear resistance requirements, high manufacturing and maintenance costs, and susceptibility to jamming in traditional brewing devices.

### Summary of the invention

The invention provides a coffee brewing device that solves the problems of high precision and wear resistance requirements, high manufacturing and maintenance costs, and susceptibility to jamming in traditional brewing devices.

In order to solve the above technical problems, the invention adopts the following technical scheme:
a coffee brewing device, comprising a brewing head and a brewer, the device also comprises a fixing bracket, a brewer bracket, and a drive motor, the fixing bracket is provided with a screw rod and a driving bracket, the screw rod is in transmission engagement with the drive motor via a first gear set, the screw rod is connected to the driving bracket through a threaded engagement, the driving bracket is connected to the brewing head, the brewer is connected to the brewer bracket, the brewer bracket is rotatably engaged with the fixing bracket, the device also comprises a guide plate, the guide plate is rotatably engaged with the fixing bracket, one side of the guide plate is provided with a special-shaped slot, and the other side is provided with an elongated slot, the brewing head or the screw rod is provided with a main convex column that extends into the special-shaped slot, the brewer bracket is provided with a follower convex column that extends into the elongated slot, the special-shaped slot comprises an upper slot and a lower slot that are interconnected; when the main convex column moves within the upper slot, the guide plate drives the brewer to rotate; when the main convex column moves within the lower slot, the brewing head and the brewer move linearly relative to each other.

Further, the driving bracket is detachably connected to the brewing head.

Further, the first gear set comprises a first gear fixed on a shaft of the drive motor and a second gear fixed on one end of the screw rod, the first gear meshes with the second gear.

Further, the device also comprises a brewer motor, the brewer is provided with a push plate and a rack arranged at a bottom of the push plate, the brewer is provided with a second gear set that is in transmission with the rack, the brewer motor is in transmission engagement with the second gear set via a third gear set.

Further, the second gear set comprises a third gear for obtaining power from the third gear set, the third gear set comprises a fourth gear for providing power to the second gear set, an axial center of the fourth gear is provided with a rotating gear column that extends into a cylindrical hole located at an axial center of the third gear; when the rotating gear column rotates, the third gear is driven to rotate.

Further, the device also comprises a motor bracket, the brewer motor and the third gear set are arranged on the motor bracket, the fixing bracket is provided with a clearance opening, the brewer bracket passes through the clearance opening to be fixedly connected to the motor bracket, the rotating gear column is located in a connection between the motor bracket and the brewer support.

Further, the third gear set also comprises a fifth gear, a plurality of magnet blocks are evenly distributed around an axial center of the fifth gear, the motor bracket is provided with a Hall sensor for detecting the magnet blocks.

Further, the device also comprises a turntable, an axial center of the fourth gear is provided with a turntable column that extends into a column opening at an axial center of the turntable; when the turntable column rotates, the turntable is driven to rotate, a protrusion is arranged at an edge of the turntable, a turntable micro switch corresponding to the protrusion is arranged on the motor bracket.

Further, the fixing bracket is provided with a start micro switch, the brewer is provided with a start convex column, the brewer bracket is provided with a clearance hole, the start convex column passes through the clearance hole to cooperate with the start micro switch.

Further, the brewing head comprises a brewing head seat, a movable cover movably connected to a bottom of the brewing head seat, and a brewing head bracket fixedly connected to a top of the brewing head seat, the brewing head bracket is connected to the driving bracket, a spring is arranged between the movable cover and the brewing head seat, a water outlet net penetrating an inside and an outside of the movable cover is arranged at a bottom of the movable cover, the brewing head seat is provided with a water inlet pipe and a pressure relief pipe, two ends of the water inlet pipe are respectively provided with a water inlet leading to an inside and an outside of the brewing head seat and a water outlet leading to the inside of the movable cover, two ends of the pressure relief pipe are respectively provided with a pressure relief port leading to the inside and outside of the brewing head seat and an inlet leading to the inside of the movable cover, the water inlet pipe is provided with a check valve, the pressure relief pipe is provided with a check pressure relief valve; when the movable cover and the brewing head seat are drawn closer together by an external force, the water outlet hole and the water outlet net become connected.

The invention has the following advantageous effects:
the fixing bracket is provided with a screw rod and a driving bracket, the screw rod is in transmission engagement with the drive motor via a first gear set, the screw rod is connected to the driving bracket through a threaded engagement, the driving bracket is connected to the brewing head, the brewer is connected to the brewer bracket, the brewer bracket is rotatably engaged with the fixing bracket, the guide plate is rotatably engaged with the fixing bracket, one side of the guide plate is provided with a special-shaped slot, and the other side is provided with an elongated slot, the brewing head or the screw rod is provided with a main convex column that extends into the special-shaped slot, the brewer bracket is provided with a follower convex column that extends into the elongated slot, the special-shaped slot comprises an upper slot and a lower slot that are interconnected; when the main convex column moves within the upper slot, the guide plate drives the brewer to rotate, so as to realize the alignment movement and the powder scraping movement of the brewer; when the main convex column moves within the lower slot, the brewing head and the brewer move linearly relative to each other, allowing for the combined movement of the brewing head and the brewer during brewing, as well as the separation movement of the brewing head and the brewer after brewing. The invention realizes the driving of the brewing head and the brewer using a single motor, which has a simple structure, saves space and cost. The movement of the main convex column within the special-shaped slot drives the rotation of the guide plate; by abandoning the need for a movable frame, the brewer is directly guided by the elongated slot; this significantly reduces the incidence of jamming in the brewer, lowers the requirements for precision and wear resistance, and further decreases manufacturing and maintenance costs.

### Brief Description of the drawings

In order to explain the technical schemes in the embodiments of the invention or prior art more clearly, the accompanying drawings needed to be used in the description of the embodiments or the prior art will be briefly introduced below. Obviously, the accompanying drawings in the following description are only are some embodiments of the invention. For those of ordinary skill in the art, other accompanying drawings can be obtained based on these accompanying drawings without exerting creative efforts.
FIG. 1 is an exploded view of the invention.
FIG. 2 is an exploded view of the invention from another perspective.
FIG. 3 is a schematic diagram of a three-dimensional structure of the invention when the brewer is taken out.
FIG. 4 is a schematic diagram of a three-dimensional structure of the invention after the brewer is placed in and before brewing.
FIG. 5 is a rear view of the invention after the brewer is placed in and before brewing.
FIG. 6 is a schematic diagram of a three-dimensional structure of the invention after the brewer is placed in and in the brewing state.
FIG. 7 is a rear view of the invention after the brewer is placed in and in the brewing state.
FIG. 8 is a schematic diagram of a three-dimensional structure of the coordination between the brewer motor and the third gear set in the invention.
FIG. 9 is a cross-sectional view of the invention when the brewing head is inserted into the brewer and in the brewing state.
FIG. 10 is a cross-sectional view of the invention after the brewing head is separated from the brewer.
FIG. 11 is an enlarged view of point A in FIG. 2.
FIG. 12 is a cross-sectional view of the start micro switch area of the invention.

In the figures: 1 brewing head, 10 main convex column, 11 brewing head seat, 12 movable cover, 13 brewing head bracket, 14 water outlet net, 15 water inlet pipe, 151 water inlet, 152 water outlet, 153 check valve, 16 pressure relief pipe, 161 pressure relief port, 162 inlet, 163 check pressure relief valve, 2 brewer, 21 push plate, 22 rack, 23 start convex column, 3 fixing bracket, 31 drive motor, 32 screw rod, 33 driving bracket, 34 clearance opening, 35 start micro switch, 351 micro switch body, 352 reset spring, 353 touch column, 354 guiding column, 355 spring chamber, 356 touch through-hole, 357 inclined surface, 4 brewer bracket, 41 follower convex column, 42 clearance hole, 5 first gear set, 51 first gear, 52 second gear, 6 guide plate, 61 special-shaped slot, 611 upper slot, 612 lower slot, 62 elongated slot, 7 motor bracket, 71 brewer motor, 72 Hall sensor, 73 turntable, 74 column opening, 75 protrusion, 76 turntable micro switch, 8 second gear set, 81 third gear, 82 cylindrical hole, 9 third gear set, 91 fourth gear, 92 rotating gear column, 93 turntable column, 94 fifth gear, 95 magnet block.

### Description of Embodiments

In order to make the technical means, creative features, objectives and effects of the invention easier to understand, the invention is further described below in combination with specific drawings.

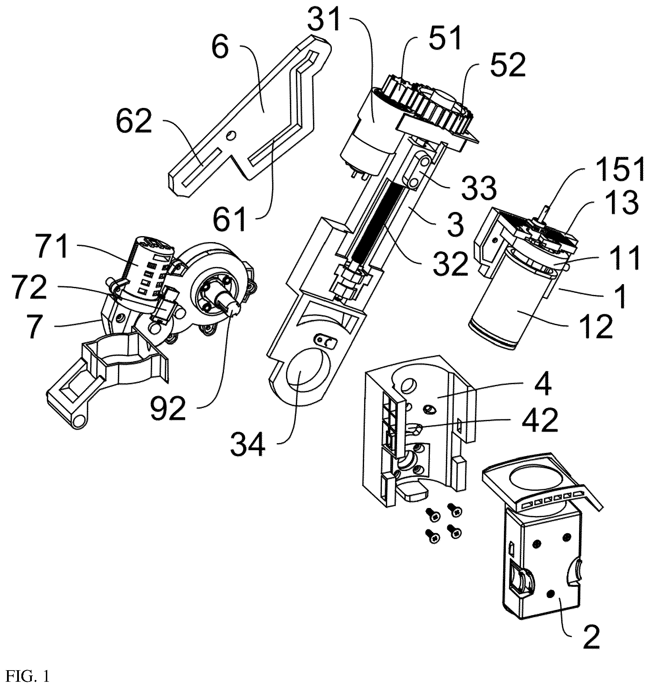

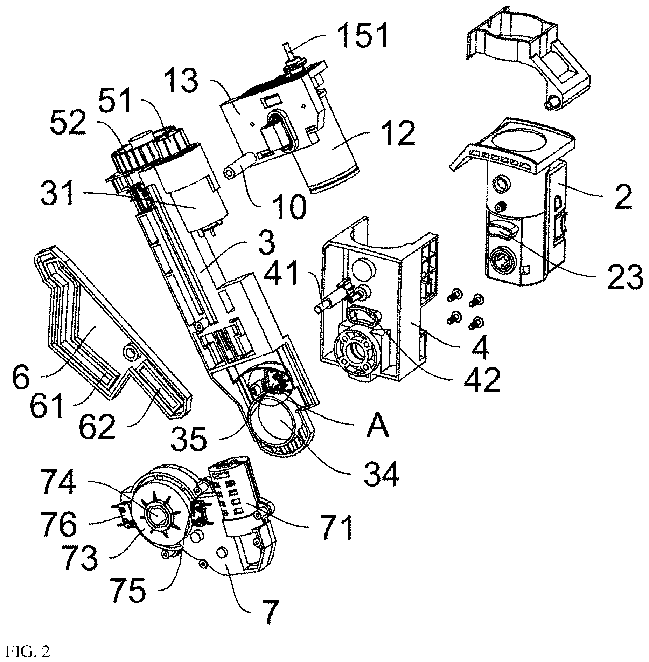

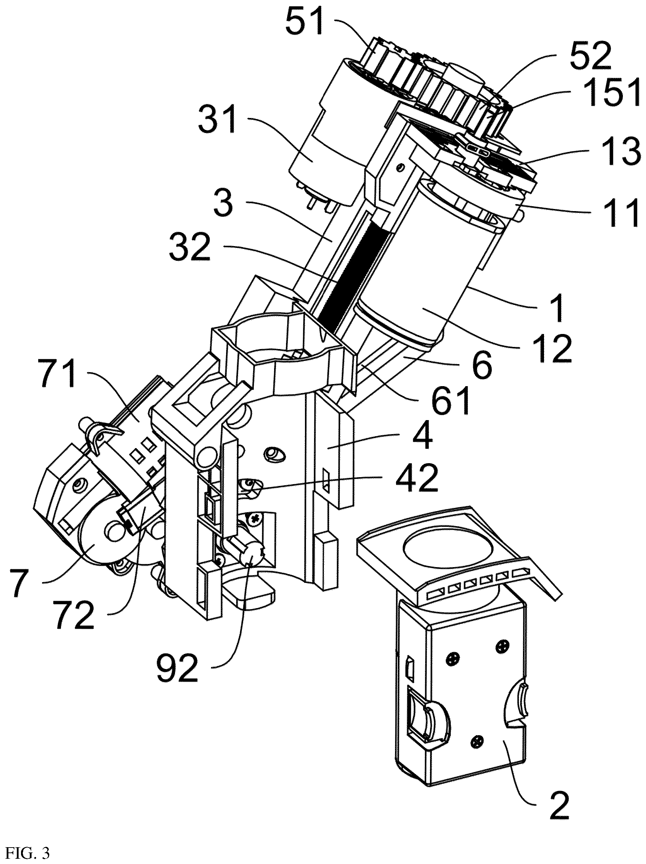

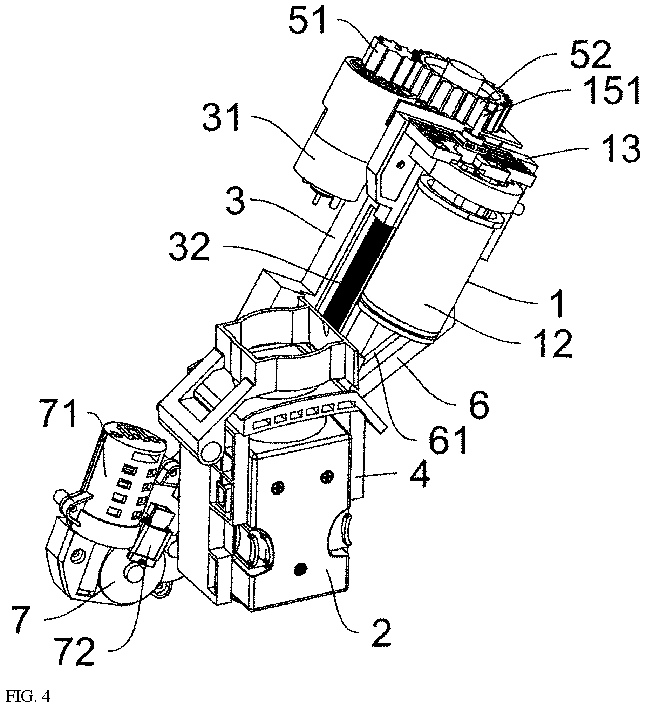

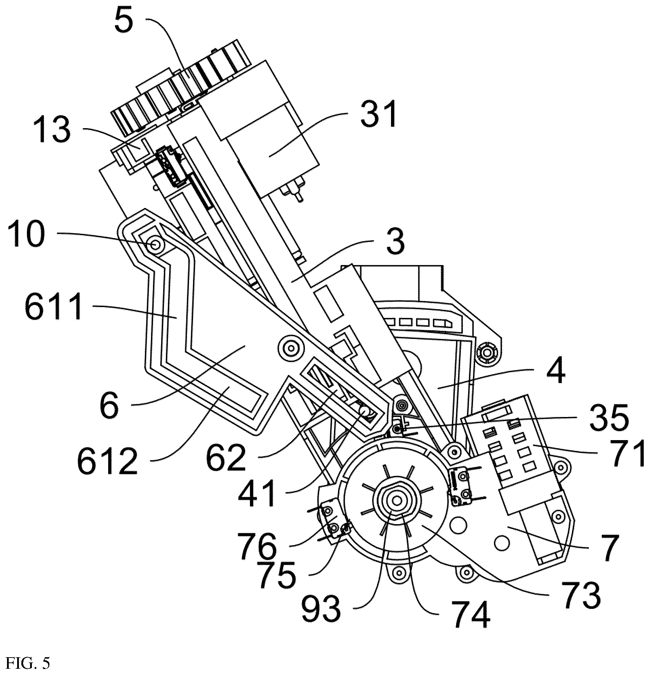

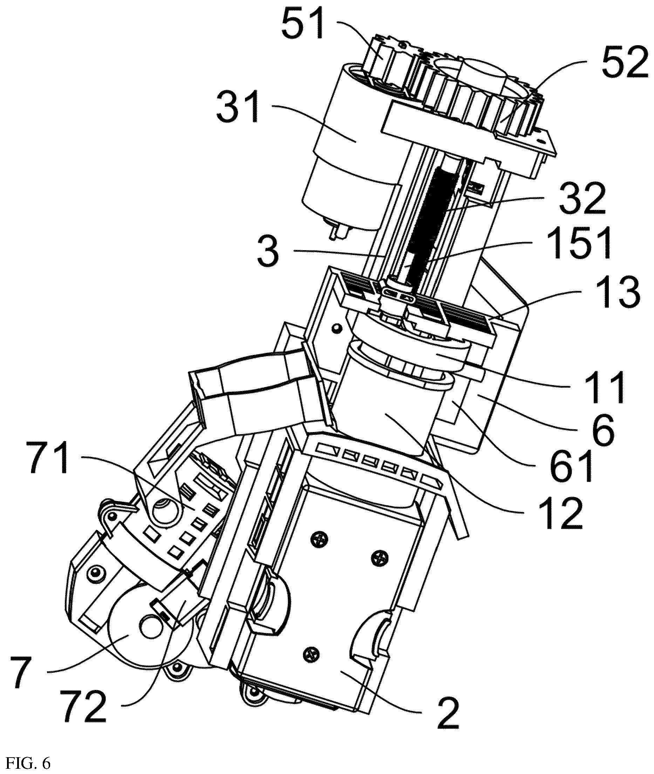

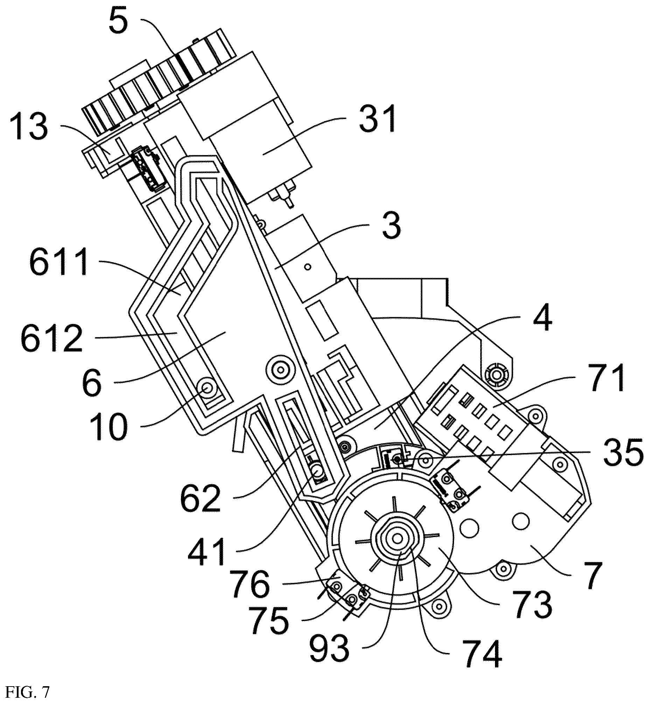

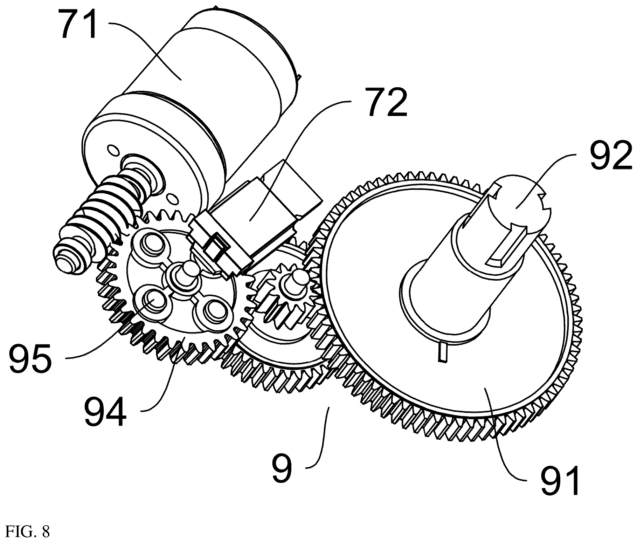

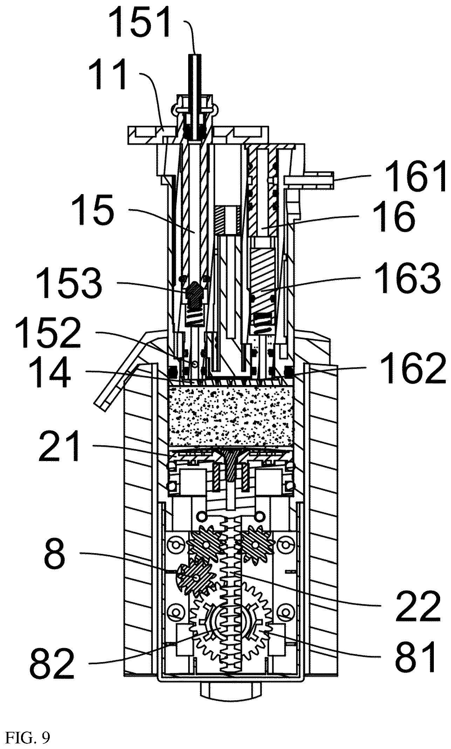

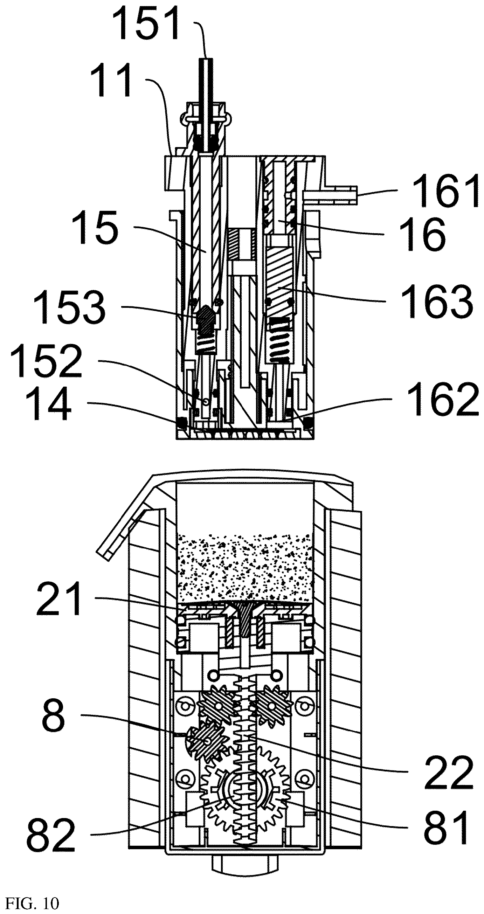

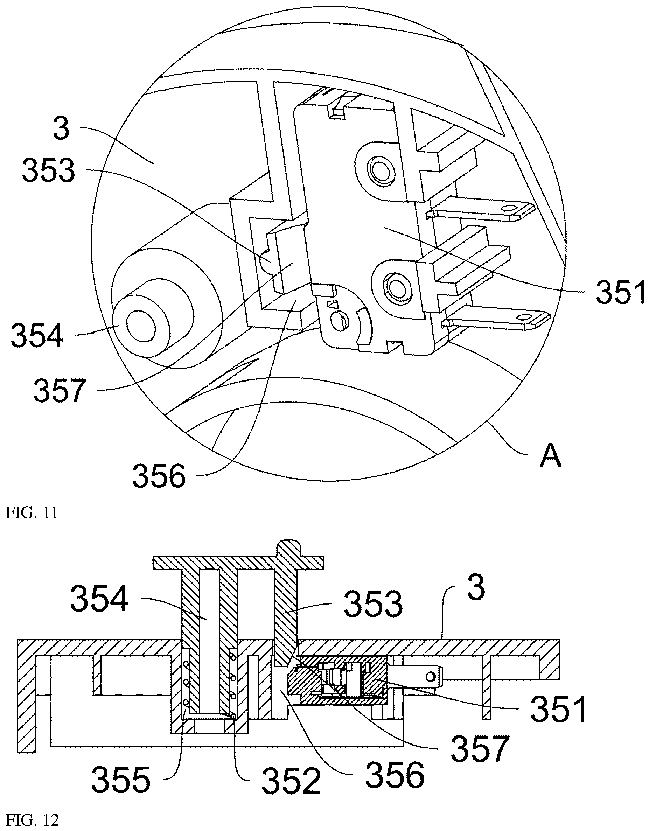

Referring to FIG. 1 to FIG. 12, a coffee brewing device, comprising a brewing head 1 and a brewer 2, the device also comprises a fixing bracket 3, a brewer bracket 4, and a drive motor 31, the fixing bracket 3 is provided with a screw rod 32 and a driving bracket 33, the screw rod 32 is in transmission engagement with the drive motor 31 via a first gear set 5, the screw rod 32 is connected to the driving bracket 33 through a threaded engagement, the driving bracket 33 is connected to the brewing head 1, the brewer 2 is connected to the brewer bracket 4, the brewer bracket 4 is rotatably engaged with the fixing bracket 3, the drive motor 31 drives the screw rod 32, and the screw rod 32 drives the driving bracket 33, thereby driving the brewing head 1 to move along the direction of the screw rod 32; the device also comprises a guide plate 6, the guide plate 6 is rotatably engaged with the fixing bracket 3, one side of the guide plate 6 is provided with a special-shaped slot 61, and the other side is provided with an elongated slot 62, the brewing head 1 or the screw rod 32 is provided with a main convex column 10 that extends into the special-shaped slot 61, the brewer bracket 4 is provided with a follower convex column 41 that extends into the elongated slot 62, the special-shaped slot 61 comprises an upper slot 611 and a lower slot 612 that are interconnected; when the main convex column 10 moves within the upper slot 611, the guide plate 6 drives the brewer 2 to rotate, so as to realize the alignment movement and the powder scraping movement of the brewer; when the main convex column 10 moves within the lower slot 612, the brewing head 1 and the brewer 2 move linearly relative to each other, allowing for the combined movement of the brewing head 1 and the brewer 2 during brewing, as well as the separation movement of the brewing head 1 and the brewer 2 after brewing. The invention realizes the driving of the brewing head 1 and the brewer 2 using a single motor, which has a simple structure, saves space and cost. The movement of the main convex column within the special-shaped slot drives the rotation of the guide plate; by abandoning the need for a movable frame, the brewer is directly guided by the elongated slot; this significantly reduces the incidence of jamming in the brewer, lowers the requirements for precision and wear resistance, and further decreases manufacturing and maintenance costs. Preferably, the driving bracket 33 is detachably connected to the brewing head 1.
the first gear set 5 comprises a first gear 51 fixed on a shaft of the drive motor 31 and a second gear 52 fixed on one end of the screw rod 32, the first gear 51 meshes with the second gear 52. This simple structure is sufficient for the drive motor 31 to drive the screw rod 32.

The device also comprises a brewer motor 71, the brewer 2 is provided with a push plate 21 and a rack 22 arranged at a bottom of the push plate 21, the brewer 2 is provided with a second gear set 8 that is in transmission with the rack 22, the brewer motor 71 is in transmission engagement with the second gear set 8 via a third gear set 9. This simple structure enables the brewer motor 71 to drive the push plate 21 to move up and down, facilitating the powder compression and powder pushing movements.

The second gear set 8 comprises a third gear 81 for obtaining power from the third gear set 9, the third gear set 9 comprises a fourth gear 91 for providing power to the second gear set 8, an axial center of the fourth gear 91 is provided with a rotating gear column 92 that extends into a cylindrical hole 82 located at an axial center of the third gear 81; when the rotating gear column 92 rotates, the third gear 81 is driven to rotate. The rotating gear column 92 can be detached from the third gear 81, allowing for the quick assembly and disassembly between the second gear set 8 and the third gear set 9.

The device also comprises a motor bracket 7, the brewer motor 71 and the third gear set 9 are arranged on the motor bracket 7, the fixing bracket 3 is provided with a clearance opening 34, the brewer bracket 4 passes through the clearance opening 34 to be fixedly connected to the motor bracket 7, the rotating gear column 92 is located in a connection between the motor bracket 7 and the brewer support 4. This design allows the fixing bracket 3 to be clamped between the motor bracket 7 and the brewer bracket 4, resulting in high space utilization and a smaller volume. When the guide plate 6 drives the brewer 2 to rotate, the motor bracket 7 rotates together with the brewer 2, causing the brewer motor 71 and the second gear set 8 to rotate as a whole.

The third gear set 9 also comprises a fifth gear 94, a plurality of magnet blocks 95 are evenly distributed around an axial center of the fifth gear 94, the motor bracket 7 is provided with a Hall sensor 72 for detecting the magnet blocks 95. This allows for control of the drive motor 31 and brewer motor 71 based on a preset rotation angle, enabling precise movement of the components.

The device also comprises a turntable 73, an axial center of the fourth gear 91 is provided with a turntable column 93 that extends into a column opening 74 at an axial center of the turntable 73; when the turntable column 93 rotates, the turntable 73 is driven to rotate, a protrusion 75 is arranged at an edge of the turntable 73, a turntable micro switch 76 corresponding to the protrusion 75 is arranged on the motor bracket 7. This allows for control of the drive motor 31 and brewer motor 71 based on a preset rotation angle, enabling precise movement of the components.

The fixing bracket 3 is provided with a start micro switch 35, the brewer 2 is provided with a start convex column 23, the brewer bracket 4 is provided with a clearance hole 42, the start convex column 23 passes through the clearance hole 42 to cooperate with the start micro switch 35. The brewing process only begins after the brewer 2 is properly installed, making it safer to use.

The brewing head 1 comprises a brewing head seat 11, a movable cover 12 movably connected to a bottom of the brewing head seat 11, and a brewing head bracket 13 fixedly connected to a top of the brewing head seat 11, the brewing head bracket 13 is connected to the driving bracket 33, a spring is arranged between the movable cover 12 and the brewing head seat 11, a water outlet net 14 penetrating an inside and an outside of the movable cover 12 is arranged at a bottom of the movable cover 12, the brewing head seat 11 is provided with a water inlet pipe 15 and a pressure relief pipe 16, two ends of the water inlet pipe 15 are respectively provided with a water inlet 151 leading to an inside and an outside of the brewing head seat 11 and a water outlet 152 leading to the inside of the movable cover 12, two ends of the pressure relief pipe 16 are respectively provided with a pressure relief port 161 leading to the inside and outside of the brewing head seat 11 and an inlet 162 leading to the inside of the movable cover 12, the water inlet pipe 15 is provided with a check valve 153, the pressure relief pipe 16 is provided with a check pressure relief valve 163; when the movable cover 12 and the brewing head seat 11 are drawn closer together by an external force, the water outlet hole 152 and the water outlet net 14 become connected, while the check pressure relief valve 163 closes, so that hot water enters a brewing chamber formed by the water outlet net 14 and the push plate 21 from the water inlet 151 and the check valve 153; during pressurized brewing, the check valve 153 blocks the reflux of gas and water, ensuring that the coffee powder in the brewing chamber is fully brewed and dissolved; when the brewing head 1 is separated from the brewer 2, the movable cover 12 and the brewing head seat 11 move away from each other, the water outlet hole 152 and the water outlet net 14 are disconnected, and the check pressure relief valve 163 opens to discharge excess gas and water pressure from the brewing chamber, achieving the functions of one-way check, brewing coffee, and pressure relief; this design can reduce the number of control components, resulting in a simpler and more reliable structure.

The start micro switch 35 comprises a micro switch body 351, a push block, and reset springs 352, the push block is provided with a touch column 353 and a guiding column 354, the fixing bracket 3 is provided with a spring chamber 355 for accommodating the reset springs 352 and the guiding column 354, as well as a touch through-hole 356 that allows the touch column 353 to pass through, an end of the touch column 353 is provided with an inclined surface 357, the start convex column 23 corresponds to the position of the push block, the inclined surface 357 corresponds to the position of an triggering end of the micro switch body 351. When the brewer 2 is placed in the brewer bracket 4, the start convex column 23 passes through the clearance hole 42 to push the push block, and the inclined surface 357 gradually increases to push the triggering end of the micro switch body 351, triggering the micro switch body 351 to open; when the brewer 2 is separated from the brewer bracket 4, the inclined surface 357 gradually moves away from the triggering end of the micro switch body 351, triggering the micro switch body 351 to close. In this way, the installation position state of the brewer 2 is accurate and in place, and the structure is simple.

The above shows and describes the basic principle, main features and the advantages of the invention. The technicians in this industry should understand that the invention is not limited by the above embodiments. The above embodiments and descriptions in the specification are only for explaining the principle of the invention. Without departing from the spirit and scope of the invention, the invention will have various changes and improvements, and these changes and improvements shall fall within the protection scope of the invention. The protection scope of the invention is defined by the claims and their equivalents.

## Claims

1. A coffee brewing device, comprising a brewing head (1) and a brewer (2), wherein the device also comprises a fixing bracket (3), a brewer bracket (4), and a drive motor (31), the fixing bracket (3) is provided with a screw rod (32) and a driving bracket (33), the screw rod (32) is in transmission engagement with the drive motor (31) via a first gear set (5), the screw rod (32) is connected to the driving bracket (33) through a threaded engagement, the driving bracket (33) is connected to the brewing head (1), the brewer (2) is connected to the brewer bracket (4), the brewer bracket (4) is rotatably engaged with the fixing bracket (3), the device also comprises a guide plate (6), the guide plate (6) is rotatably engaged with the fixing bracket (3), one side of the guide plate (6) is provided with a special-shaped slot (61), and the other side is provided with an elongated slot (62), the brewing head (1) or the screw rod (32) is provided with a main convex column (10) that extends into the special-shaped slot (61), the brewer bracket (4) is provided with a follower convex column (41) that extends into the elongated slot (62), the special-shaped slot (61) comprises an upper slot (611) and a lower slot (612) that are interconnected; when the main convex column (10) moves within the upper slot (611), the guide plate (6) drives the brewer (2) to rotate; when the main convex column (10) moves within the lower slot (612), the brewing head (1) and the brewer (2) move linearly relative to each other.

2. The coffee brewing device according to claim 1, wherein the driving bracket (33) is detachably connected to the brewing head (1).

3. The coffee brewing device according to claim 1, wherein the first gear set (5) comprises a first gear (51) fixed on a shaft of the drive motor (31) and a second gear (52) fixed on one end of the screw rod (32), the first gear (51) meshes with the second gear (52).

4. The coffee brewing device according to claim 1, wherein the device also comprises a brewer motor (71), the brewer (2) is provided with a push plate (21) and a rack (22) arranged at a bottom of the push plate (21), the brewer (2) is provided with a second gear set (8) that is in transmission with the rack (22), the brewer motor (71) is in transmission engagement with the second gear set (8) via a third gear set (9).

5. The coffee brewing device according to claim 4, wherein the second gear set (8) comprises a third gear (81) for obtaining power from the third gear set (9), the third gear set (9) comprises a fourth gear (91) for providing power to the second gear set (8), an axial center of the fourth gear (91) is provided with a rotating gear column (92) that extends into a cylindrical hole (82) located at an axial center of the third gear (81); when the rotating gear column (92) rotates, the third gear (81) is driven to rotate.

6. The coffee brewing device according to claim 5, wherein the device also comprises a motor bracket (7), the brewer motor (71) and the third gear set (9) are arranged on the motor bracket (7), the fixing bracket (3) is provided with a clearance opening (34), the brewer bracket (4) passes through the clearance opening (34) to be fixedly connected to the motor bracket (7), the rotating gear column (92) is located in a connection between the motor bracket (7) and the brewer support (4).

7. The coffee brewing device according to claim 6, wherein the third gear set (9) also comprises a fifth gear (94), a plurality of magnet blocks (95) are evenly distributed around an axial center of the fifth gear (94), the motor bracket (7) is provided with a Hall sensor (72) for detecting the magnet blocks (95).

8. The coffee brewing device according to claim 6, wherein the device also comprises a turntable (73), an axial center of the fourth gear (91) is provided with a turntable column (93) that extends into a column opening (74) at an axial center of the turntable (73); when the turntable column (93) rotates, the turntable (73) is driven to rotate, a protrusion (75) is arranged at an edge of the turntable (73), a turntable micro switch (76) corresponding to the protrusion (75) is arranged on the motor bracket (7).

9. The coffee brewing device according to claim 1, wherein the fixing bracket (3) is provided with a start micro switch (35), the brewer (2) is provided with a start convex column (23), the brewer bracket (4) is provided with a clearance hole (42), the start convex column (23) passes through the clearance hole (42) to cooperate with the start micro switch (35).

10. The coffee brewing device according to any one of claims 1 to 9, wherein the brewing head (1) comprises a brewing head seat (11), a movable cover (12) movably connected to a bottom of the brewing head seat (11), and a brewing head bracket (13) fixedly connected to a top of the brewing head seat (11), the brewing head bracket (13) is connected to the driving bracket (33), a spring is arranged between the movable cover (12) and the brewing head seat (11), a water outlet net (14) penetrating an inside and an outside of the movable cover (12) is arranged at a bottom of the movable cover (12), the brewing head seat (11) is provided with a water inlet pipe (15) and a pressure relief pipe (16), two ends of the water inlet pipe (15) are respectively provided with a water inlet (151) leading to an inside and an outside of the brewing head seat (11) and a water outlet (152) leading to the inside of the movable cover (12), two ends of the pressure relief pipe (16) are respectively provided with a pressure relief port (161) leading to the inside and outside of the brewing head seat (11) and an inlet (162) leading to the inside of the movable cover (12), the water inlet pipe (15) is provided with a check valve (153), the pressure relief pipe (16) is provided with a check pressure relief valve (163); when the movable cover (12) and the brewing head seat (11) are drawn closer together by an external force, the water outlet hole (152) and the water outlet net (14) become connected, while the check pressure relief valve (163) closes; when the movable cover (12) and the brewing head seat (11) move away from each other, the water outlet hole (152) and the water outlet net (14) are disconnected, and the check pressure relief valve (163) opens.
